# EUROPÄISCHE PATENTANMELDUNG

(11) **EP 1 742 331 A1**
(43) Veröffentlichungstag der Anmeldung: **10.01.2007**
(21) Anmeldenummer: 05014886.5
(22) Anmeldetag: 08.07.2005
(51) Int. Cl.: H02K 3/50, H02K 1/16

(54) **Ständerteil eines Turbogenerators und Turbogenerator**

(71) Anmelder: SIEMENS AKTIENGESELLSCHAFT, 80333 München (DE)
(72) Erfinder: Kowalski, Waldemar, 45472 Mülheim an der Ruhr (DE); Lehmann, Christoph, Dr., 47506 Neukirchen-Vluyn (DE); Pohlmann, Friedhelm, Dr., 45355 Essen (DE); Spiess, Karlheinz, 47445 Moers (DE)

(57) **Zusammenfassung**

Ein Ständerteil eines Turbogenerators (1) weist ein Ständeraktivteil (17) auf, das einen ferromagnetischen Hohlkörper und Ständerleiter (31) aufweist. Zur Verschaltung der Ständerleiter (31) ist üblicherweise ein Ständerwickelkopf vorgesehen, bei dem eine aufwendige Verschaltung der Stäbe in Kombination mit Versteifungs- und Stützelementen vorgesehen ist. Ein solcher Ständerwickelkopf wird gemäß dem neuen Konzept im Prinzip dadurch vermieden, dass eine Verschaltung der Ständerleiter (31) im Bereich des ferromagnetischen Hohlkörpers (19) angeordnet ist. Dadurch wird eine kompakte und axial verkürzte Bauweise von Turbogeneratoren (1) und eine bessere mechanische Stabilität im endseitigen Bereich des Ständerteils (5) erreicht. Wirbelstromverluste, die üblicherweise an den Stirnseiten (37) des Ständerteils (5) im Ständerwickelkopf auftreten, werden durch die Vermeidung des Ständerwickelkopfes als solchen vermieden.

## Beschreibung

Die Erfindung betrifft ein Ständerteil eines Turbogenerators mit einem Ständeraktivteil, das einen ferromagnetischen Hohlkörper und Ständerleiter aufweist. Die Erfindung betrifft weiter einen Turbogenerator.

Ein Turbogenerator ist eine von einer Turbine angetriebene elektrische Maschine zur Erzeugung von Strom. Turbogeneratoren können heutzutage Leistungen zwischen 100 MW und 1500 MW erzeugen. Üblicherweise weist ein Turbogenerator ein Ständerteil und einen im Ständerteil drehbar gelagerten und von der Turbine antreibbaren Läufer auf. Ein magnetisches Feld wird üblicherweise mit einer strombeaufschlagten Läuferwicklung auf dem Läufer erzeugt, das oftmals ein einziges Polpaar aufweist. Darüber hinaus sind Läuferwicklungen auch mit zwei oder drei Polpaaren möglich. Auf diese Weise induziert ein magnetisches Drehfeld einen Strom in elektrischen Ständerleitern des Ständerteils. Das Turbogeneratorständerteil weist ein Ständergehäuse und ein Ständeraktivteil auf, das einen ferromagnetischen Hohlkörper und Ständerleiter als Teile einer Ständerwicklung und eines Schaltleitungsverbandes zur Erzeugung von ein-, zwei-, drei- oder mehrphasigem Strom aufweist. Der ferromagnetische Hohlkörper ist in der Regel durch das so genannte Ständerblechpaket gebildet, in das die Ständerwicklung eingelegt ist. Die Strombeaufschlagung der Ständerwicklung wird in der Regel über den Potential gesteuerten Schaltleitungsverband bewerkstelligt.

Die in der Regel in Form von Stäben ausgebildeten Ständerleiter treten üblicherweise an einem stirnseitigen Endteil des Ständeraktivteils aus, sind abgebogen und auf einer Kegeloberfläche zusammengeführt und derart miteinander verschaltet, dass pro Polpaar und Phase des Turbogenerators eine Wicklungsanordnung, beispielsweise in Form einer Spulenanordnung, gebildet ist, in die bei Drehung des Läufers ein Strom induzierbar ist. Die Verschaltung der Ständerleiter erfolgt im so genannten Wickelkopf, der bei üblichen Ausführungen eines Turbogenerators nicht Teil des Ständeraktivteils ist.

Die Verschaltung der Ständerleiter erfolgt in Kombination mit Versteifungs- und Stützelementen am Wickelkopf. Diese Maßnahme ist je nach Anzahl der Polpaare und Phasenzahl des Turbogenerators aufwendig und benötigt aufgrund der üblichen Kegelform des Ständerwickelkopfes, z. B. bei Generatoren im Bereich von 100 MW bis 1500 MW einen Platzbedarf, der etwa 1 m bis 2 m der axialen Länge eines Turbogenerators ausmacht. Darüber hinaus hat sich gezeigt, dass die oben erläuterte Konstruktion bei einem Ständerwickelkopf nicht nur eine zeit- und kostenintensive Fertigung erfordert, sondern im Betriebsfall eines Turbogenerators in der Regel auch hohen Kraft- und Schwingungsbelastungen aufgrund der auftretenden Strom- und Magnetkräfte ausgesetzt ist. Insbesondere in Störfällen oder in transienten Betriebsbereichen eines Turbogenerators erweisen sich die auf einen Ständerwickelkopf wirkenden Schwingungsanregungen als besonders nachteilig.

Wünschenswert wäre eine gleichzeitig betriebssichere, einfachere und Raum sparende Möglichkeit, Ständerleiter einer Ständerwicklung oder eines Schaltungleitungsverbandes unter Vermeidung der oben genannten Probleme zu verschalten.

An dieser Stelle setzt die Erfindung an, deren Aufgabe es ist, eine Vorrichtung anzugeben, bei der eine gleichzeitig betriebssichere und Raum sparende Verschaltung von Ständerleitern gegeben ist.

Hinsichtlich der Vorrichtung wird die Aufgabe durch die Erfindung mit einem eingangs genannten Ständerteil eines Turbogenerators gelöst, bei dem erfindungsgemäß eine Verschaltung der Ständerleiter im Bereich des ferromagnetischen Hohlkörpers angeordnet ist.

Die Erfindung geht dabei gemäß dem neuen Konzept von der Überlegung aus, dass sich eine besonders vorteilhafte Raum sparende Konstruktion und Betriebssicherheit bei einem Ständerteil dadurch ergibt, dass die aufwendige Verschaltung eines üblichen Ständerwickelkopfes am besten durch eine Vermeidung des Ständerwickelkopfes als solches erreicht wird. Die Erfindung hat erkannt, dass es als Alternative zum Ständerwickelkopf möglich ist, eine Verschaltung der Ständerleiter bereits im Bereich des ferromagnetischen Hohlkörpers anzuordnen, d. h. bereits im Bereich des Ständeraktivteils. Ein üblicherweise außerhalb des Ständeraktivteils vorgesehener Ständerwickelkopf kann somit mit seiner bisher üblichen Verschaltungsfunktion praktisch entfallen.

Das neue Konzept hat vor allem den Vorteil einer wesentlich kompakteren und axial kürzeren Bauweise eines Ständerteils und darüber hinaus ist die mechanische Stabilität im endseitigen Bereich eines Ständerteils dadurch verbessert, dass grundsätzlich weniger kraft- und schwingungsbelastbare Verschaltungs- und Konstruktionselemente, wie dies der Ständerwickelkopf eins ist, vermieden werden. Stattdessen kann die Stützwirkung des ferromagnetischen Hohlkörpers im Ständeraktivteil genutzt werden, um eine Verschaltung der Ständerleiter im Bereich des ferromagnetischen Hohlkörpers mechanisch zu stabilisieren. Durch ein Entfallen des Ständerwickelkopfes werden außerdem Verluste durch Wirbelströme im stirnseitigen Bereich des ferromagnetischen Hohlkörpers verringert.

Vorteilhafte Weiterbildungen der Erfindung sind den Unteransprüchen zu entnehmen und geben im Einzelnen vorteilhafte Möglichkeiten an, das Ständerteil gemäß dem beschriebenen Konzept mit weiteren Vorteilen zu realisieren.

In einer besonders bevorzugten Ausführungsform ist eine Ständerwicklung in Form einer Anzahl von längs des ferromagnetischen Hohlkörpers angeordneten Ständerleitern gebildet, wobei ein Ständerleiter in einem stirnseitigen Endbereich des ferromagnetischen Hohlkörpers einen in oder auf der Wandung des ferromagnetischen Hohlkörpers angeordneten gewundenen Verlauf aufweist. Mit dem gewundenen Verlauf im Bereich des ferromagnetischen Hohlkörpers ist es vorteilhaft möglich, die Enden der zu verschaltenden Ständerleiter in dem ferromagnetischen Hohlkörper herum aneinander zu führen.

Insbesondere sind dazu ein erster Ständerleiter und ein zweiter Ständerleiter einer gleichen Wicklungsanordnung am Ende des gewundenen Verlaufs über eine elektrische Verschaltung miteinander verschaltet. Eine Wicklungsanordnung stellt praktisch ein spulenartiges Gebilde dar. Eine Ständerwicklung kann eine oder mehrere Wicklungsanordnungen aufweisen. Dies ist insbesondere abhängig von der Polzahl eines Läufers und der Zahl der Phasen bei einem Ständerteil. So weist ein Generator mit einem Polpaar und drei Phasen drei dem Polpaar zugeordnete Wicklungsanordnungen auf. Im Falle von zwei Polpaaren sind dies sechs Wicklungsanordnungen und im Falle von drei Polpaaren neun Wicklungsanordnungen. Im Falle weiterer Polpaare sind dies entsprechende Vielfache von drei Wicklungsanordnungen, wenn es sich um Dreiphasendrehstrom handelt.

Vorzugsweise ist der gewundene Verlauf radial innerhalb oder außerhalb der Wandung des ferromagnetischen Hohlkörpers angeordnet. Bei einer Anordnung innerhalb oder außerhalb der Wandung des ferromagnetischen Hohlkörpers kann also eine Nut in der Wandung des ferromagnetischen Hohlkörpers für den gewundenen Verlauf vermieden werden. Auf diese Weise lässt sich der gewundene Verlauf besonders einfach realisieren.

Vorzugsweise ist die Verschaltung in einer Bohrung des ferromagnetischen Hohlkörpers angeordnet. Dies kann eine Bohrung entlang eines Umfangs des Hohlkörpers sein oder eine Bohrung in radialer Richtung des Hohlkörpers. Auf diese Weise ist eine Verschaltung Platz sparend und vor Außeneinflüssen sicher geschützt untergebracht. Ein ferromagnetischer Hohlkörper ist vorzugsweise in Form eines Blechpakets gebildet. Ein Ständerleiter ist vorzugsweise in Form eines Stabes gebildet. Insbesondere ist dabei eine Stabverschaltung in einer Blechpaketbohrung untergebracht.

Vorzugsweise ist ein Ständerleiter in wenigstens einem Teilbereich des gewundenen Verlaufs mit einem Isolierstoff gelagert. Vorzugsweise sind die Ständerleiterenden in einem Isolierstoff eingegossen, was eine besonders sichere Lagerung und Isolierung bewirkt. Als Isolierstoff eignet sich insbesondere ein isolierendes Harz.

Gemäß einer weiteren besonders bevorzugten Weiterbildung der Erfindung ist eine Ständerwicklung in Form einer Anzahl von längs des ferromagnetischen Hohlkörpers angeordneten Ständerleitern gebildet, wobei ein Ständerleiter in einem zwischen stirnseitigen Endbereichen des ferromagnetischen Hohlkörpers liegenden Mittbereich einen in oder auf der Wandung des ferromagnetischen Hohlkörpers angeordneten geradlinigen Verlauf aufweist. Dadurch ist ein Ständerleiter im Mittbereich besonders einfach ausgeführt.

Vorzugsweise wird der geradlinige Verlauf von einer Nut in der Wandung des ferromagnetischen Hohlkörpers aufgenommen. Ein Ständerleiter ist dadurch besonders sicher im ferromagnetischen Hohlkörper untergebracht.

In einer besonders bevorzugten Kombination der oben genannten Weiterbildungen wird ein geradliniger Verlauf eines Ständerleiters von einer Nut in der Wandung des ferromagnetischen Hohlkörpers aufgenommen und ein gewundener Verlauf des Ständerleiters führt im stirnseitigen Endbereich des ferromagnetischen Hohlkörpers aus einer Nut heraus und ist in oder auf der Wandung des ferromagnetischen Hohlkörpers angeordnet. Der gewundene Verlauf führt Enden von einander zugeordneten Ständerleitern zueinander, die vorzugsweise in einer Bohrung des ferromagnetischen Hohlkörpers elektrisch miteinander verschaltet sind.

Gemäß einer Weiterbildung ist darüber hinaus eine am stirnseitigen Endbereich des ferromagnetischen Hohlkörpers angeordnete elektrische Verbindung in Form eines elektrischen Wicklungsanschlusses mit einer Zuleitung zu einer Stromführung elektrisch verbunden. Auf diese Weise kann die in einem Ständerleiter induzierte Leistung besonders vorteilhaft zur Abgabe an ein Netz an ein Anschlussterminal außerhalb des Ständerteils herausgeführt werden.

Vorzugsweise sind im Ständerteil Mittel zur Kühlung der Ständerwicklung vorgesehen. Dabei kann es sich um eine direkte oder indirekte Kühlung der Wicklung handeln. Beispielsweise kann im Rahmen einer indirekten Kühlung ein Ständerleiter durch innerhalb von Schlitzen, Kanälen oder den oben genannten Nuten geführte Kühlluft gekühlt werden. Im Rahmen einer direkten Kühlung können auch Kühlkanäle in einem Ständerleiter selbst vorgesehen sein, die kühlmittelbeaufschlagt sein können, beispielsweise mit einem Kühlmittel in Form von Wasser.

Betreffend die Vorrichtung führt die Erfindung auch auf einen Turbogenerator mit einem Gehäuse und mit einem in dem Gehäuse angeordneten Ständerteil der oben beschriebenen Art gemäß dem neuen Konzept sowie einem in dem Ständerteil angeordnet Läufer.

Ausführungsbeispiele der Erfindung werden nachfolgend anhand der Zeichnung im Vergleich zum Stand der Technik, welcher zum Teil ebenfalls dargestellt ist, beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Im Einzelnen zeigt die Zeichnung in:
- FIG 1: eine dreidimensional perspektivische Schemaansicht eines Turbogenerators gemäß dem Stand der Technik;
- FIG 2: eine dreidimensionale perspektivische Ansicht eines Ständerteils gemäß einer besonders bevorzugten Ausführungsform nach dem neuen Konzept;
- FIG 3: eine Schnittansicht des in FIG 2 gezeigten Ständerteils entlang seiner axialen Ausdehnung.

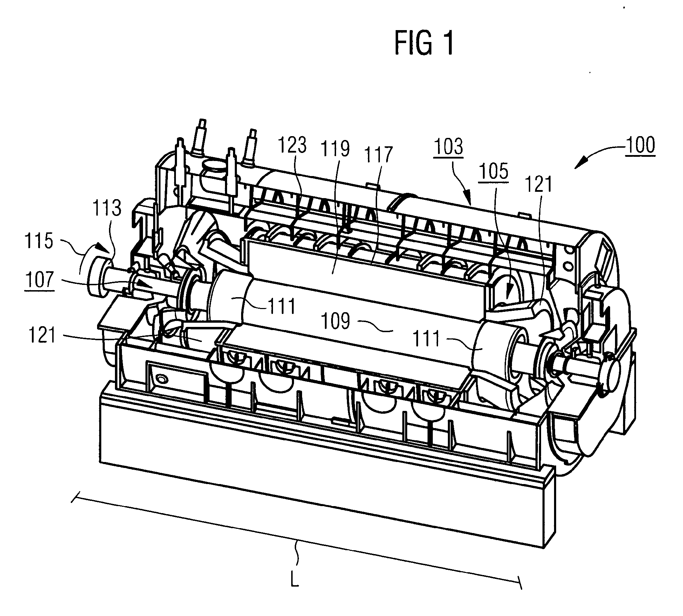

FIG 1 zeigt einen Turbogenerator 100 mit einem Gehäuse 103 sowie einem in dem Gehäuse 103 angeordneten Ständerteil 105 und einem im Ständerteil drehbar angeordneten Läufer 107. Der Läufer weist ein Aktivteil 109 auf, das eine nicht näher gezeigte Läuferwicklung aufweist zur Darstellung eines in dieser Ausführungsform zweipoligen, gegebenenfalls in anderen Ausführungsformen auch vierpoligen oder sechspoligen Magnetfeldes. Das Läuferaktivteil ist durch zwei Läuferkappen 111 begrenzt und zusammen mit dem Läuferaktivteil 109 auf der Läuferwelle 113 gelagert. Der über eine Turbine in Drehbewegung 115 versetzbare Läufer 107 erzeugt somit ein magnetisches Drehfeld, das die nicht näher dargestellten Ständerleiter des Ständers 105 mit einem variablen magnetischen Fluss durchsetzt, so dass in den Ständerleitern nach dem Induktionsgesetz ein Strom I induziert wird. Der Ständer 105 weist dazu ein Ständeraktivteil 117 auf, das u. a. aus einem ferromagnetischen Hohlkörper 119 in Form eines Blechpakets gebildet ist. In das den ferromagnetischen Hohlkörper 119 bildende Blechpaket sind die nicht näher dargestellten Ständerleiter als Teil einer Ständerwicklung mit einem angeschlossenen Schaltleitungsverband eingelegt. Die Ständerwicklung im Blechpaket weist bei dem vorliegenden zweipoligen zur Erzeugung von Dreiphasendrehstrom ausgelegten Turbogenerator 100 drei Wicklungsanordnungen auf, die praktisch jeweils eine Spule bilden. Das heißt, die Ständerwicklung ist vorliegend in Form einer Dreiphasendrehstromwicklung gebildet, die zu einem Stern geschaltet ist. Dabei bilden drei Enden der drei Wicklungsanordnungen jeweils eine Phase. Drei weitere Enden der drei Wicklungsanordnungen sind in einem Sternpunkt zum Nullleiter verschaltet.

Bei der in FIG 1 dargestellten Ausführungsform eines Turbogenerators 100 gemäß dem Stand der Technik erfolgt die Verschaltung der Ständerleitungen im Wickelkopf 121, der jeweils an einem stirnseitigen Ende des Ständerteils 105 direkt angrenzend zum Ständeraktivteil 117 angeordnet ist. Der Ständerwickelkopf 121 zählt damit nicht mehr zum aktiven Teil des Turbogenerators 100.

Die Ständerleiter sind in Form von Stäben gebildet, die im Ständerwickelkopf 121 verschaltet werden. Dazu treten die Stäbe aus dem Ständeraktivteil 117 aus, werden auf einer Kegeloberfläche abgebogen und zusammengeführt und zur Bildung der oben beschriebenen spulenartigen Wicklungsanordnungen verschaltet. Ein Ständerwickelkopf 121 ist damit je nach Anzahl der Polpaare des Läuferaktivteils 109 und je nach Anzahl der durch das Ständeraktivteil 117 gebildeten Phasen entsprechend aufwendig. Der Platzbedarf bei Generatoren im Bereich von 100 MW bis 1500 MW liegt durchaus von 1 m bis 2 m der gesamten axialen Länge L des Turbogenerators 100. Außerdem ist ein Ständerwickelkopf 121 in der Regel mit konstruktiv zum Teil aufwendigen Versteifungs- und Stützelementen versehen, um die insbesondere durch Stromkräfte oder Schwingungsanregungen eingebrachten mechanischen Belastungen der Verschaltung der Ständerleitungen in Form von Stäben zu unterbinden.

Für jede spulenartige Wicklungsanordnung werden zwei Enden der Ständerleitungen zur Leistungsabnahme über so genannte Stromdurchführungen 123 und ein Leitungsterminal zur Abgabe der im Turbogenerator 100 generierten Leistung nach außen, gegebenenfalls über einen Transformator oder einen Umformer, an ein nicht näher dargestelltes Netz gegeben.

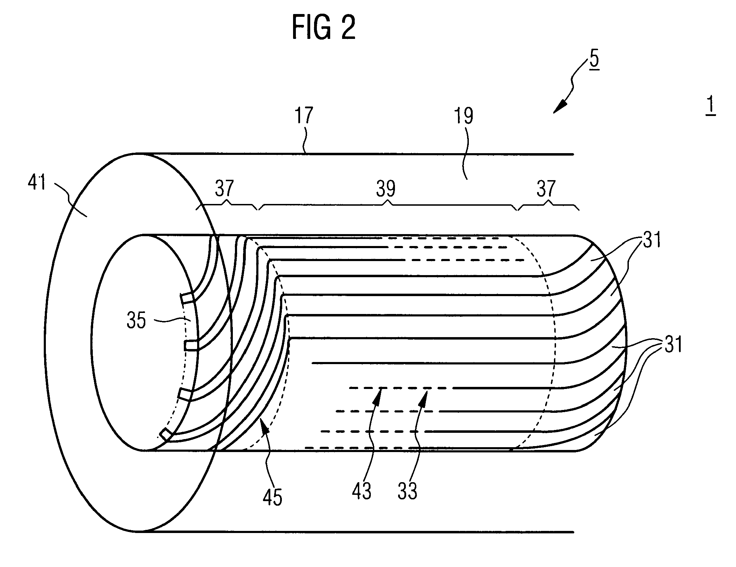

FIG 2 zeigt schematisch eine bevorzugte Ausführung eines in FIG 1 im Prinzip gezeigten Ständeraktivteils 17 als einen Teil eines nicht weiter gezeigten Ständerteils 5. Dabei ist das Ständeraktivteil 17 gemäß dem neuen Konzept so ausgeführt, dass ein bei einem nicht weiter gezeigten Turbogenerator 1 gemäß dem neuen Konzept ein Ständerwickelkopf 121, wie er im Stand der Technik vorgesehen ist, als solcher vermieden ist. Auf diese Weise kann ein Turbogenerator 1 gemäß dem neuen Konzept mit einer geringeren axialen Ausdehnung ausgeführt werden und ist im Bereich der stirnseitigen Enden des Ständeraktivteils 5 stabiler als übliche Turbogeneratoren. Schwingungsanregungen, Stromkraftbelastungen und Wirbelströme in einem üblicherweise vorhandenen Ständerwickelkopf 121 sind damit vermieden.

Dazu weist das Ständeraktivteil 17 einen ferromagnetischen Hohlkörper 19 auf und Ständerleitungen 31 als Teil einer Ständerwicklung 33 und einem nicht näher dargestellten Schaltleitungsverband. Dabei ist eine symbolisch dargestellte Verschaltung 35 der Ständerleiter 31 gemäß dem neuen Konzept noch im Bereich des ferromagnetischen Hohlkörpers 19 angeordnet, also im aktiven Teil des Turbogenerators 1. Bei der bevorzugten Ausführungsform der FIG 2 ist dazu die Ständerwicklung 33 in Form einer Anzahl von längs des ferromagnetischen Hohlkörpers 19 angeordneten Ständerleitern 31 gebildet. Zunächst weist ein Ständerleiter 31 in einem zwischen stirnseitigen Endbereichen 37 des ferromagnetischen Hohlkörpers 19 liegenden Mittbereich 39 einen in der Wandung 41 des ferromagnetischen Hohlkörpers 19 angeordneten geradlinigen Verlauf 43 auf. Dazu wird der geradlinige Verlauf von einer nicht näher dargestellten Nut in der Wandung 41 des ferromagnetischen Hohlkörpers 19 aufgenommen. In einem stirnseitigen Endbereich 37 des ferromagnetischen Hohlkörpers 19 weist ein Ständerleiter 31 einen aus der Wandung 41 des ferromagnetischen Hohlkörpers 19 herausführenden gewundenen Verlauf 45 auf. Dazu ist der gewundene Verlauf bei der in FIG 2 dargestellten bevorzugten Ausführungsform radial innerhalb der Wandung 41 des ferromagnetischen Hohlkörpers angeordnet.

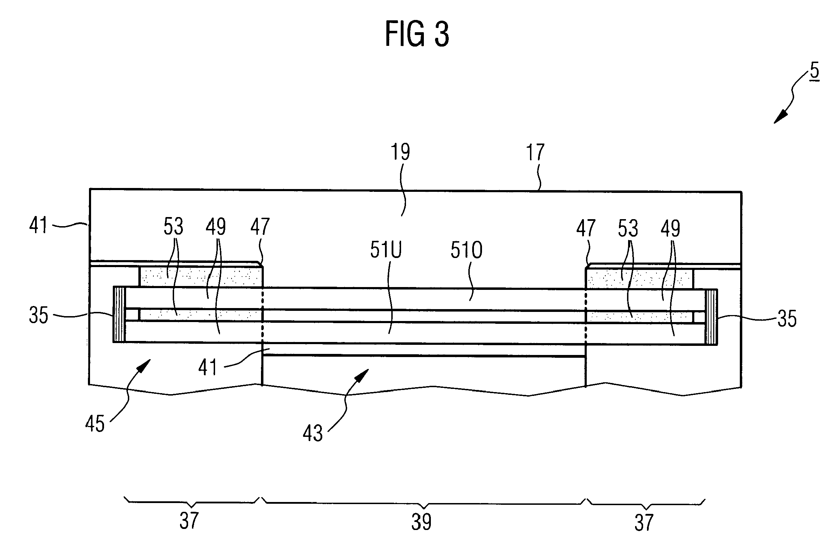

Die Verläufe 43, 45 sind in der Schnittbilddarstellung der FIG 3 für die in FIG 2 dargestellte besonders bevorzugte Ausführungsform eines Ständeraktivteils 17 deutlicher dargestellt. Dabei sind die gleichen Bezugszeichen wie in FIG 2 verwendet. Der Mittbereich 39 des ferromagnetischen Hohlkörpers 19 ist dabei in einem Winkel 47 von den stirnseitigen Endbereichen 37 des ferromagnetischen Hohlkörpers 19 abgesetzt. In dem Winkel sind die Enden 49 eines Ständerleiters 510, 51U, also in einem Teilbereich des gewundenen Verlaufs 45, mit einem Isolierstoff 53 gelagert. Vorliegend ist ein Ständerleiter 510 in einer Oberlage einer Zweischichtanordnung einer Ständerwicklung 33 angeordnet und ein Ständerleiter 51U ist in einer Unterlage einer Zweischichtanordnung einer Ständerwicklung 33 angeordnet. Durch eine Zweischichtanordnung der Ständerwicklung 33 kann eine höhere Leistungsgenerierung in der Ständerwicklung 33 erreicht werden. Die Ständerleiter 510, 51U sind an ihren Enden 49 durch eine Verschaltung 35 elektrisch miteinander verbunden. Die Verschaltung 35 erfolgt noch im Bereich des Ständeraktivteils 17. Dadurch kann ein gemäß dem Stand der Technik außerhalb des Ständeraktivteils liegender separater Ständerwickelkopf 121 eines üblichen Turbogenerators 100 der FIG 1 eingespart werden. Die Verschaltung kann auch je nach Bedarf die unterschiedlichen Wicklungsanordnungen in Reihe oder parallel zueinander schalten. Dazu sind die Stäbe je nach Zweckmäßigkeit z. B. verlötet, verklebt oder verschraubt.

Zusammenfassend weist ein Ständerteil eines Turbogenerators 1 ein Ständeraktivteil 17 auf, das einen ferromagnetischen Hohlkörper und Ständerleiter 31 aufweist. Zur Verschaltung der Ständerleiter 31 ist üblicherweise ein Ständerwickelkopf vorgesehen, bei dem eine aufwendige Verschaltung der Stäbe in Kombination mit Versteifungs- und Stützelementen vorgesehen ist. Ein solcher Ständerwickelkopf wird gemäß dem neuen Konzept im Prinzip dadurch vermieden, dass eine Verschaltung der Ständerleiter 31 im Bereich des ferromagnetischen Hohlkörpers 19 angeordnet ist. Dadurch wird eine kompakte und axial verkürzte Bauweise von Turbogeneratoren 1 und eine bessere mechanische Stabilität im endseitigen Bereich des Ständerteils 5 erreicht. Wirbelstromverluste, die üblicherweise an den Stirnseiten 37 des Ständerteils 5 im Ständerwickelkopf auftreten, werden durch die Vermeidung des Ständerwickelkopfes als solchen vermieden.

## Patentansprüche

1. Ständerteil (5) eines Turbogenerators (1) mit einem Ständeraktivteil (17),
das einen ferromagnetischen Hohlkörper (19) und Ständerleiter (31) aufweist,
**dadurch gekennzeichnet, dass**
eine Verschaltung der Ständerleiter (31) im Bereich des ferromagnetischen Hohlkörpers (19) angeordnet ist.

2. Ständerteil (5) nach Anspruch 1,
**dadurch gekennzeichnet, dass**
eine Ständerwicklung (33) in Form einer Anzahl von längs des ferromagnetischen Hohlkörpers (19) angeordneten Ständerleitern (31) gebildet ist, wobei ein Ständerleiter (31) in einem stirnseitigen Endbereich (37) des ferromagnetischen Hohlkörpers (19) einen in oder auf der Wandung (41) des ferromagnetischen Hohlkörpers (19) angeordneten gewundenen Verlauf (45) aufweist.

3. Ständerteil (5) nach Anspruch 1 oder 2,
**dadurch gekennzeichnet, dass**
ein erster Ständerleiter (510) und ein zweiter Ständerleiter (51U) einer gleichen Wicklungsanordnung am Ende des gewundenen Verlaufs (45) über eine elektrische Verschaltung (35) miteinander verschaltet sind.

4. Ständerteil (5) nach Anspruch 3,
**dadurch gekennzeichnet, dass**
der gewundene Verlauf (45) radial innerhalb oder außerhalb der Wandung (41) des ferromagnetischen Hohlkörpers (19) angeordnet ist.

5. Ständerteil (5) nach Anspruch 3 oder 4,
**dadurch gekennzeichnet, dass**
die elektrische Verschaltung (35) in einer Bohrung des ferromagnetischen Hohlkörpers (19) angeordnet ist.

6. Ständerteil (5) nach einem der Ansprüche 1 bis 5,
**dadurch gekennzeichnet, dass**
ein Ständerleiter (31, 510, 51U) in wenigstens einem Teilbereich (49) des gewundenen Verlaufs (45) mit einem Isolierstoff (53) gelagert ist.

7. Ständerteil (5) nach einem der Ansprüche 1 bis 6,
**dadurch gekennzeichnet, dass**
eine Ständerwicklung (33) in Form einer Anzahl von längs des ferromagnetischen Hohlkörpers (19) angeordneten Ständerleitern (31) gebildet ist, wobei ein Ständerleiter (31) in einem zwischen stirnseitigen Endbereichen (37) des ferromagnetischen Hohlkörpers (19) liegenden Mittbereich (39) einen in oder auf der Wandung (41) des ferromagnetischen Hohlkörpers (19) angeordneten geradlinigen Verlauf (43) aufweist.

8. Ständerteil (5) nach Anspruch 7,
**dadurch gekennzeichnet, dass**
der geradlinige Verlauf (43) von einer Nut in der Wandung (41) des ferromagnetischen Hohlkörpers (19) aufgenommen wird.

9. Ständerteil (5) nach einem der Ansprüche 1 bis 8,
**gekennzeichnet durch**
eine am stirnseitigen Endbereich (37) des ferromagnetischen Hohlkörpers (19) angeordnete elektrische Verbindung in Form eines elektrischen Wicklungsanschlusses mit einer Zuleitung zu einer Stromdurchführung (23).

10. Ständerteil (5) nach einem der Ansprüche 1 bis 9,
**gekennzeichnet durch**
Mittel zur Kühlung einer Ständerwicklung (33).

11. Turbogenerator (1) mit einem Gehäuse (3) und einem in dem Gehäuse (3) angeordneten Ständerteil (5) nach einem der vorhergehenden Ansprüche sowie einem im Ständerteil (5) angeordneten Läufer (7).
